# FASCICULE DE BREVET EUROPEEN

(11) **EP 2 535 901 B1**
(45) Date de publication et mention de la délivrance du brevet: **09.11.2022**
(21) Numéro de dépôt: 12171392.9
(22) Date de dépôt: 08.06.2012
(51) Int. Cl.: C08K 3/08, H01B 7/28, C08K 3/26, C08K 3/34, H01B 13/14, H01B 9/02

(54) **Câble moyenne ou haute tension avec gaine polyoléfine contenant des charges minérales**
Mittel- und Hochspannungsstromkabel mit einem Polyolefin-Schutzmantel, der mineralische Füllstoffe enthält
Medium- or high-voltage cable with polyolefin sheath containing mineral fillers

(30) Priorité: 17.06.2011 FR 1155335
(43) Date de publication de la demande: 19.12.2012
(73) Titulaire: Silec Cable, 77130 Montereau Fault Yonne (FR)
(72) Inventeur: Denizet, Isabelle, 77940 La Brosse Montceau (FR); Lelievre, Cécile, 77130 Misy Sur Yonne (FR); Pleinecassagne, Stéphanie, 07350 Cruas (FR); Poisson, Bernard, 89100 Saint-Clément (FR)
(74) Mandataire: Lavialle, Bruno François Stéphane

(56) Documents cités:
- EP-A1- 0 774 488
- EP-A1- 1 156 493
- EP-A1- 1 557 443
- FR-A1- 2 809 737

## Description

La présente invention concerne un câble de transport d'énergie et plus particulièrement un câble dédié au transport d'énergie électrique de moyenne tension et un câble dédié au transport d'énergie électrique de haute tension. L'invention a également pour objet un procédé de fabrication d'un tel câble.

Les câbles de transport d'énergie sont en général constitués d'au moins une âme électriquement conductrice, entourée d'un isolant lui même protégé du milieu extérieur par une gaine de protection. L'âme conductrice est généralement constituée de brins métalliques, d'aluminium ou de cuivre, assemblés en torons. L'isolant peut être formé d'une couche de polyéthylène réticulé. La gaine de protection est un matériau thermoplastique électriquement isolant.

Lorsque le câble est plus particulièrement destiné à être soumis à une tension supérieure à un millier de volts, le câble comprend en outre des couches conductrices qui sont extrudées ou rubanées. Ces couches conductrices ont pour fonction de répartir régulièrement le champ électrique aux interfaces des couches isolantes pour éviter les effets de pointe et, par conséquent, limiter les risques de claquage électrique.

Ainsi, les câbles de ce type comprennent en général une couche semi-conductrice interne en contact avec l'âme conductrice et une couche semi-conductrice externe en contact avec un écran métallique, lui-même en contact avec la couche de protection, pour recueillir les courants de fuite, ou le courant de court-circuit en cas d'incident. L'écran métallique est relié à la terre via un système de protection qui déclenchera l'ouverture du circuit si l'intensité qui passe à travers l'écran devient trop élevée.

EP 1 156 493 A1 décrit des câbles électriques destinés principalement à des réseaux moyenne et haute tension, lesdits câbles comprenant, de l'intérieur vers l'extérieur, un conducteur électrique central, un premier écran semi-conducteur, une couche isolante électriquement, un deuxième écran semi-conducteur, un écran métallique et une gaine externe.

Par le passé, l'écran métallique était en plomb ou alliage de plomb extrudé autour de la couche semi-conductrice externe, ce qui avait pour avantage de garantir l'étanchéité du câble par rapport à une entrée inopinée d'eau qui peut provoquer une réduction de la tenue dans le temps du câble, par suite de la formation d'arborescences d'eau dans l'isolant (phénomène également appelé « water-treing »). L'ensemble formé par l'isolant et les couches semi-conductrices interne et externe est couramment appelé tricouche isolant.

Plus récemment, le plomb a été remplacé par un ruban métallique, de préférence en aluminium, posé en long, et collé à recouvrement ou bien soudé, de telle sorte que ce ruban constitue après pose un tube continu qui assure une fonction d'étanchéité du tricouche isolant vis-à-vis de l'extérieur. Lorsque la section électrique du ruban n'est pas suffisante, on peut ajouter des fils en cuivre ou en aluminium, placés entre le semi conducteur externe et l'écran métallique, de façon à obtenir une section électrique suffisante.

Cette solution présente plusieurs avantages évidents, dont le gain en poids du câble, son plus faible impact environnemental (du fait de la suppression d'un métal connu pour avoir des effets néfastes sur la santé) et enfin sur le point de vue du coût du câble fabriqué.

Comme l'épaisseur de l'écran en aluminium est plus faible, on risque fortement d'avoir des plis dans l'écran lors de la phase d'enroulement qui suit l'extrusion de la gaine de protection. Pour pallier cette difficulté, l'écran métallique est contrecollé à la gaine de protection à l'aide d'un polymère adhésif, de façon à créer un complexe.

Les premiers complexes utilisés couramment dans les câbles pour moyenne tension faisaient appel à une gaine de protection en polychlorure de vinyle (PVC), collée sur l'écran aluminium au moyen d'un adhésif spécifique. Cela conduisait à un câble facile à mettre en œuvre, car assez souple, facilement raccordable, avec une résistance à l'essai à la flamme correcte.

Soumis à un essai d'immersion en cuve dans des conditions extrêmement sévères (solution saline à 80 °C, pendant 3000 heures), ce câble présentait néanmoins une sensibilité à la corrosion, du fait de l'absorption d'eau par le PVC, qui se traduisait par des décollements entre la gaine de protection et l'écran métallique, pouvant aller jusqu'à une attaque corrosive de la face externe du ruban d'aluminium et au percement de celui-ci, entraînant la fin de la protection du tricouche isolant.

Il a été envisagé de former la gaine de protection en polyéthylène (ou PE) au lieu du PVC pour améliorer la résistance à la corrosion. Un essai d'immersion a permis de montrer une absence d'oxydation de l'écran aluminium de sorte que le tricouche isolant reste protégé au cours de l'essai, même si on observe dans certaines zones une baisse de l'adhésion entre l'écran d'aluminium et la gaine de protection à la fin de l'essai de corrosion.

Par contre, le câble a perdu de sa souplesse, la résistance à la flamme est inférieure à celle procurée par le PVC, et on rencontre des retraits significatifs à l'essai de tenue aux cycles thermiques, utilisé pour représenter le fonctionnement thermodynamique du câble.

Des expérimentations en vue d'applications en conditions sévères menées avec des gaines de protection en polyéthylène de grades classiques du commerce ont révélé des baisses d'adhérence entre la gaine de protection et l'écran en aluminium après vieillissement, des problèmes de retrait sur échantillon long, ou bien encore des problèmes de résistance au choc, ce qui limite singulièrement le choix des matériaux utilisables pour ce type d'application.

Ceci est vrai quelle que soit le type de polyéthylène utilisé, ainsi :
- le polyéthylène basse densité, radicalaire ou linéaire, est intéressant pour la souplesse du câble et le retrait mais n'améliore pas la résistance au choc ;
- le polyéthylène haute densité a des propriétés intéressantes en termes de résistance au choc et à l'abrasion mais conduit à un retrait plus important et augmente la rigidité du câble.

Un but de l'invention est de proposer un câble de transport d'énergie présentant des performances améliorées par rapport aux câbles actuellement utilisés.

A cet effet, on propose, selon l'invention, un câble de transport d'énergie électrique, comprenant, de l'intérieur vers l'extérieur, un conducteur électrique central, un premier écran semi-conducteur, une couche isolante électriquement, un deuxième écran semi-conducteur, un écran métallique et une gaine externe en matériau électriquement isolant. Le matériau de la gaine externe comporte un polyéthylène dans lequel est dispersée une charge minérale sous forme pulvérulente comportant du calcium.

De façon surprenante, on a constaté qu'il est possible d'améliorer de façon sensible certaines caractéristiques de la gaine en polyéthylène, en ajoutant des charges minérales adaptées, en particulier du carbonate de calcium, sans détruire les caractéristiques premières du polyéthylène.

L'utilisation d'un matériau de gainage comportant une charge minérale a permis d'améliorer :
- le stress cracking de la gaine ;
- la tenue à la flamme (pour éviter la coulure du polymère) ;
- le retrait en température ;
- la tenue au choc du câble (permettant de réduire l'épaisseur de la gaine) ;
- la tenue à la corrosion de l'écran métallique, lorsque celui-ci est constitué d'une feuille métallique contrecollée ;
- l'adhérence de la gaine PE chargée sur l'écran métallique, en vieillissement à 100 °C, lorsque l'écran est constitué d'une feuille métallique contrecollée ;
- la perméabilité à la vapeur d'eau ;
- la diffusivité thermique (qui est plus élevée de sorte que le câble se refroidit mieux).

Lorsque l'écran métallique comporte un ruban métallique contrecollé à la gaine externe, il est nécessaire d'avoir une très bonne adhérence entre le ruban et la gaine externe. De façon avantageuse, grâce au fait que la gaine externe comporte une charge minérale sous forme pulvérulente comportant du calcium, les inventeurs ont pu constater que la tenue à la corrosion de l'écran métallique est améliorée. Une telle amélioration traduit une amélioration de l'adhésion de la gaine sur le ruban. En outre, le vieillissement de l'adhérence de la gaine chargée sur le ruban est également amélioré.

L'objectif de la présente invention, comme on le montrera dans les exemples à suivre, est surtout d'améliorer les propriétés intrinsèques des matériaux à base de polyoléfine, et particulièrement celles qui sont sensibles dans le cadre de l'utilisation de tels matériaux en gainage de câbles, et de proposer au final un câble encore plus robuste.

Selon un mode de réalisation particulier de l'invention, la charge minérale est un carbonate de calcium et, de préférence de la craie.

Naturel ou précipité, le carbonate de calcium est connu sous plusieurs formes : le marbre, la calcite, la craie, l'aragonite, la dolomite... La craie est constituée d'au moins 98% de calcite, de traces de carbonate de Magnésium et d'oxyde de Fer. Son réseau cristallin est rhomboédrique et sa dureté sur l'échelle de Mohs est de trois. Ses principales qualités sont sa blancheur et sa faible abrasion. La craie est disponible dans des granulométries très différentes, définies par le diamètre moyen des particules, qui peut varier de 1 à 10 micromètres, ainsi que par la coupe granulométrique, qui peut varier de 5 à 50 micromètres pour les grades les plus courants. De préférence, les particules de craie utilisées résultent d'un simple broyage.

De préférence, la gaine externe comprend en poids environ 75 % de polyéthylène environ et 25 % de craie.

Cette composition est celle qui offre le plus d'avantages.

L'invention a également pour objet un procédé de fabrication d'un tel câble, comprenant une étape d'extrusion d'un matériau pour former la gaine externe. Le matériau est obtenu à partir d'un mélange maître comportant un polyéthylène et une charge minérale sous forme pulvérulente comportant du calcium.

Ce mode de fabrication est particulièrement bien adapté et permet l'obtention d'une bonne homogénéité du matériau au moment de son extrusion.

Le mélange maître comporte en poids entre 15 et 40% environ de polyéthylène et entre 85 et 60 % environ de craie sous forme pulvérulente, le mélange maître comprenant, avantageusement, 25 % environ de polyéthylène et 75 % environ de charge minérale pulvérulente et le matériau comprenant au final, de préférence, 32 % de mélange maître, le reste étant sensiblement du polyéthylène.

D'autres caractéristiques et avantages de l'invention ressortiront à la lecture de la description qui suit de modes de réalisation particuliers non limitatifs de l'invention.

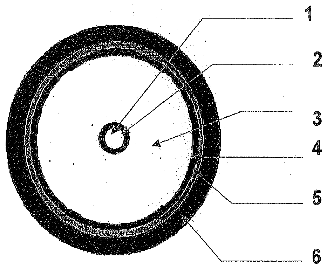

Il sera fait référence à la figure unique annexée représentant schématiquement en coupe transversale un câble conforme à l'invention.

Le câble de transport d'énergie électrique selon l'invention comprend, de l'intérieur vers l'extérieur, un conducteur électrique central 1, un premier écran semi-conducteur 2, une couche isolante électriquement 3, un deuxième écran semi-conducteur 4, un écran métallique 5 et une gaine externe 6 en matériau thermoplastique électriquement isolant. La gaine externe a une épaisseur de 2,5 mm environ et l'écran métallique 5 comprend dans un mode de réalisation préféré une feuille ou un ruban d'aluminium qui a une épaisseur comprise entre 150 et 200 µm environ et qui est contrecollé sur la gaine externe 6. Le conducteur électrique central 1, le premier écran semi-conducteur 2, la couche isolante électriquement 3, le deuxième écran semi-conducteur 4 et l'écran métallique 5, tout comme leur mode de fabrication, sont connus en eux-mêmes et ne seront pas plus détaillés ici.

La gaine externe 6 comporte un polyéthylène dans lequel est dispersée de la craie sous forme pulvérulente.

Le tableau ci-dessous donne un aperçu des propriétés qu'on obtient en introduisant une proportion croissante de craie dans un matériau à base de polyéthylène (ref).

Dans le tableau ci-dessous, le polymère utilisé est celui identifié BP 3220 de la société INEOS, de densité 0,92 selon la norme ISO 1183, et d'index de fusion (« melt flow rate » ou MFR ou MFI) 2,4 g/10 min, selon la norme ISO 1133.

Bien sûr, les pourcentages mentionnés sont des pourcentages approximatifs, la formulation contenant également des additifs anti-oxygène, lubrifiant, antioxydant bien connus de l'homme de l'art.

| | Norme d'essai utilisée | ref | 1 | 2 | 3 |
|---|---|---|---|---|---|
| % BP 3220 | | 100 | 90 | 80 | 70 |
| % Craie | | 0 | 10 | 20 | 30 |
| Masse volumique | CEI 60811-1-3 | 0,93 | 0,96 | 1,02 | 1,05 |
| Résistance à la traction (MPa) | CEI 60811-1-1 | 26 | 23 | 21,7 | 19,2 |
| Allongement à la rupture (%) | CEI 60811-1-1 | 980 | 850 | 883 | 870 |
| 10 d 110 °C Variation RT(%) Variation All (%) | CEI 60811-1-2 | 1,7 3,7 | 0,7 2 | 6 1 | 2,7 2,1 |
| Absorption eau 14d 85°C (mg/cm²) | CEI 811-1-3 | 0,21 | 0,25 | 0,32 | 0,37 |
| Résistance à la fissuration (heures) | CEI 60811-4-1 | >400 | >400 | >400 | >400 |

Le tableau ci-dessus permet de constater que l'ajout de craie, même dans une proportion relativement élevée, conduit à des propriétés tout à fait acceptables pour l'application en câble.

L'exemple suivant donne une illustration, où l'on compare les caractéristiques du polyéthylène de référence V036 produit par la société Sabic, sans et avec 20 % en poids de craie. Le V036 est un polyéthylène linéaire de densité 0,93, et d'index de fusion (« melt flow rate ») 4,2 g/10 min, lorsque mesurés dans les conditions normalisées.

| | Norme d'essai utilisée | VO 36 | V036 + 20 % de craie |
|---|---|---|---|
| Masse volumique | CEI 60811-1-3 | 0,93 | 1,03 |
| Résistance à la traction (MPa) | CEI 60811-1-1 | 25,7 | 19,2 |
| Allongement à la rupture (%) | CEI 60811-1-1 | 977 | 860 |
| Après vieillissement (10 d 110 °C) Variation RT(%) Variation All (%) | CEI 60811-1-2 | 22,1 4,5 | 16,5 8,1 |
| Résistance à la fissuration (heures) | CEI 60811-4-1 | <48 | >400 |

De façon intéressante, l'introduction de charge minérale dans un mélange à base de polyoléfine permet d'améliorer la résistance à la fissuration sous contrainte (stress-cracking) qui est une propriété fondamentale pour le vieillissement des câbles.

Comme nous l'avons vu précédemment, la gaine peut contenir une proportion élevée (> 50% en poids) de charge minérale.

Dans le mode de réalisation ici décrit, le polyéthylène utilisé est un polyéthylène de préférence basse densité. Ce thermoplastique est facile à mettre en œuvre et a une grande inertie chimique. A une température inférieure à 60°C, il résiste aux acides, aux bases et aux solutions salines.

Un mélange maître chargé en craie a été incorporé au sein de la gaine selon un pourcentage compris entre 20 à 30%. L'intérêt d'un tel mélange maître est de diminuer le retrait et augmenter la résistance mécanique et la résistance aux chocs. Le polyéthylène du mélange maître peut être le même que celui auquel le mélange maître est destiné à être incorporé, ou bien un autre polyéthylène.

La gaine externe 6 est extrudée sur l'écran métallique 5 par la mise en œuvre d'un procédé de fabrication comprenant une étape d'extrusion d'un matériau pour former la gaine externe 6.

Le matériau est formé à partir d'un mélange maître comportant en poids entre 20 et 30% environ de polyéthylène et entre 80 et 70 % environ de craie sous forme pulvérulente. Dans ce mode de réalisation, le mélange maître comprend 25 % environ de polyéthylène et 75 % environ de charge minérale pulvérulente. La craie a une granulométrie moyenne de 1,5 µm environ avec un maximum de 5 µm environ.

Des expérimentations ont montré que les meilleures performances de la gaine sont obtenues avec 32 % de ce mélange maître, le reste étant sensiblement du polyéthylène. Plus précisément, les proportions sont (en poids) :
- 2% de mélange maître colorant gris, antioxydant et anti-UV,
- 32% de mélange maître PE craie avec 75% de craie EXH1 SP d'OMYA et 25% de polyéthylène BP3052 (polyéthylène linéaire d'INEOS, d'index de fusion égal à 4,1, et de densité 0,93 selon ISO 1183),
- 66% de polyéthylène BP3220.

Ces performances sont indiquées dans le tableau comparatif ci-dessous, sous la référence « Mélange A ».

| | NFC 33226 | LDPE | | HDPE | | Mélange A | |
|---|---|---|---|---|---|---|---|
| Epaisseur de la gaine en mm | | 2,2 | 2,5 | 2,2 | 2,5 | 2,2 | 2,5 |
| Résistance à la traction (RT) en MPa | >12,5 | 17,8 | 18,3 | 33,7 | 32,3 | 16,3 | 16,1 |
| Allongement à la rupture (AR) en % | >300 | 795 | 824 | 672 | 650 | 730 | 755 |
| Vieillissement à 42d 100 °C : | | | | | | | |
| ΔRT (%) | <30 | | +12 | | -14 | | +17 |
| ΔAR (%) | <30 | | -9 | | +9 | | +14 |
| Adhérence écran aluminium sur gaine : | | | | | | | |
| - avant viellissement | >20N | | 31,6 | | 35,2 | 31,5 | 32,1 |
| - après vieillissement (42d 100°C) | >20N | | 24,5 | | 28,7 | 29,1 | 26,3 |
| Résistance à la flamme (brûleur 1kW) : hauteur non brûlée | > 50mm | | Oui | | Oui | | Oui |
| Aptitude à la pose à basse et haute températures | Pas de détérioration de la gaine | | OK | | OK | | OK |
| Retrait sur échantillon de câble de 5 m | <10mm | 5,1 | 4,5 | 6,5 | 7,2 | 1,9 | 1,5 |
| Résistance au choc | Pas de rupture de la gaine ou de l'écran | Echec | OK | Echec | OK | OK | OK |
| Résistance à l'abrasion | Pas de percement de la gaine | OK | OK | OK | OK | OK | OK |
| Etanchéité radiale et résistance à la corrosion des | Pas de corrosion de | | OK | | OK | | OK |
| écrans métalliques | l'écran | | | | | | |
| Résistance thermique à 70 °C en K/m.W | EN 821 | | 2,91 | | | | 2,48 |

L'ajout de craie dans les proportions indiquées n'affecte pas significativement les performances du câble, au regard de la norme NF C33 226, en terme de résistance à la traction, résistance à la traction en fonction du vieillissement, allongement à la rupture et allongement à la rupture en fonction du vieillissement.

En revanche, l'ajout de craie améliore la stabilité dimensionnelle de la gaine, notamment en ce qui concerne le retrait en fonction du temps qui se réduit dans une forte proportion, et améliore également la résistance au choc, ce qui autorise à réduire l'épaisseur de la gaine qui constitue un facteur important sur le plan économique.

De plus, l'introduction de charge à base de craie permet d'améliorer le comportement à la flamme du câble, en réduisant la tendance du matériau à former des coulures sous l'action de la chaleur.

La résistance au stress cracking de la gaine chargée de craie, mesurée conformément à la norme CEI 60811-4-1, est également bonne par rapport à l'application envisagée.

Une résistance importante contre le vieillissement thermique est obtenue par l'ajout d'antioxydants. De la même manière, une protection contre les UV peut être obtenue par ajout de noir de carbone ou d'agents spécifiques, tout comme une protection contre les termites par l'ajout d'additifs appropriés.

Le câble ainsi constitué est utilisable pour le transport d'énergie électrique à moyenne tension et à haute tension, la section de l'âme et les différentes épaisseurs des couches formant le câble étant déterminées en fonction notamment du courant et de la tension auxquels le câble est destiné à être soumis.

Bien entendu, l'invention n'est pas limitée aux modes de réalisation décrits mais englobe toute variante entrant dans le champ de l'invention telle que définie par les revendications.

En particulier, d'autres compositions sont envisageables pour la gaine externe dans le respect des fourchettes mentionnées.

Il est possible d'utiliser du polyéthylène haute densité, la proportion de craie dans le matériau final étant alors comprise entre 5% et 45% en poids et, de préférence, 10% à 30% environ.

Un mélange de polyéthylènes de densités identiques ou différentes est également utilisable.

Le matériau de la gaine peut comprendre un ou plusieurs copolymères. Les performances obtenues en utilisant une charge minérale telle que le kaolin, le talc ou la silice sont globalement légèrement moins bonnes que celles obtenues avec la craie par rapport à l'application envisagée. La charge minérale sous forme pulvérulente comportant du calcium et/ou du silicium constitue ainsi notamment : une charge active de renforcement de la résistance aux chocs, une charge active de renforcement de la résistance à la flamme, une charge active de renforcement de la résistance au stress-cracking et une charge active de maîtrise du retrait.

La gaine peut comprendre un mélange de charges minérales.

La gaine peut être réalisée dans des matériaux réticulés, et plus particulièrement ceux obtenus par une réticulation silane.

L'écran métallique pourra être différent de ce qui a été décrit. De préférence, l'écran métallique comprend un ruban métallique qui est contrecollé à la gaine externe. Par exemple, l'écran métallique peut comprendre un ruban de cuivre contrecollé à la gaine externe. La charge minérale sous forme pulvérulente comportant du calcium exerce dans ce cas une fonction supplémentaire de charge active de renforcement de l'adhérence du ruban métallique sur la gaine.

## Revendications

1. Câble de transport d'énergie électrique, comprenant, de l'intérieur vers l'extérieur, un conducteur électrique central, un premier écran semi-conducteur, une couche isolante électriquement, un deuxième écran semi-conducteur, un écran métallique et une gaine externe en matériau électriquement isolant, **caractérisé en ce que** le matériau de la gaine externe comporte un polyéthylène, dans lequel est dispersée une charge minérale sous forme pulvérulente comportant du calcium

2. Câble selon la revendication 1, dans lequel l'écran métallique comprend un ruban métallique qui est contrecollé à la gaine externe.

3. Câble selon la revendication 1, dans lequel la charge minérale a une granulométrie moyenne de 1,5µm environ avec un maximum de 5µm environ.

4. Câble selon la revendication 1, dans lequel la charge minérale est du carbonate de calcium.

5. Câble selon la revendication 4, dans laquelle le carbonate de calcium est de la craie.

6. Câble selon la revendication 5, dans laquelle la gaine externe comprend en poids environ 75 % de polyéthylène environ et 25 % de craie.

7. Câble selon la revendication 1, dans lequel la gaine externe a une épaisseur de 2,2 mm environ.

8. Câble selon la revendication 1, dans lequel l'écran comprend un ruban d'aluminium qui a une épaisseur comprise entre 150 et 200 µm environ et qui est contrecollé sous la gaine externe.

9. Câble selon la revendication 1, agencé pour le transport d'énergie électrique à moyenne tension.

10. Câble selon la revendication 1, agencé pour le transport d'énergie électrique à haute tension.

11. Procédé de fabrication d'un câble conforme à l'une quelconque des revendications précédentes, comprenant une étape d'extrusion d'un matériau pour former la gaine externe, **caractérisé en ce que** le matériau est formé à partir d'un mélange maître comportant un polyéthylène et une charge minérale sous forme pulvérulente comportant du calcium

12. Procédé selon la revendication 11, dans lequel la charge minérale est un carbonate de calcium et, de préférence, la craie.

13. Procédé selon la revendication 12, dans lequel le mélange maître comprend en poids entre 15 et 40% environ de polyéthylène et entre 85 et 60 % environ de craie sous forme pulvérulente.

14. Procédé selon la revendication précédente, dans lequel le mélange maître comprend 25 % environ de polyéthylène et 75 % environ de craie.

15. Procédé selon la revendication 14, dans lequel le matériau comprend 32 % de mélange maître, le reste étant sensiblement du polyéthylène.

## Patentansprüche

1. Kabel zur Übertragung elektrischer Energie, das von innen nach außen einen zentralen elektrischen Leiter, einen ersten Halbleiterschirm, eine elektrisch isolierende Schicht, einen zweiten Halbleiterschirm, einen Metallschirm und einen Außenmantel aus elektrisch isolierendem Material umfasst, **dadurch gekennzeichnet, dass** das Material des Außenmantels Polyethylen umfasst, in dem ein mineralischer Füllstoff in Pulverform, der Calcium umfasst, dispergiert ist.

2. Kabel nach Anspruch 1, bei dem der Metallschirm ein Metallband umfasst, das auf den Außenmantel laminiert ist.

3. Kabel nach Anspruch 1, wobei der mineralische Füllstoff eine durchschnittliche Korngröße von etwa 1,5 µm mit einem Maximum von etwa 5 µm aufweist.

4. Kabel nach Anspruch 1, wobei der mineralische Füllstoff Calciumcarbonat ist.

5. Kabel nach Anspruch 4, wobei es sich bei dem Calciumcarbonat um Kreide handelt.

6. Kabel nach Anspruch 5, wobei der Außenmantel etwa 75 % Polyethylen und 25 % Kreide umfasst.

7. Kabel nach Anspruch 1, wobei der Außenmantel eine Dicke von etwa 2,2 mm aufweist.

8. Kabel nach Anspruch 1, bei dem die Abschirmung ein Aluminiumband umfasst, das eine Dicke von etwa 150 bis 200 µm aufweist und unter dem Außenmantel laminiert ist.

9. Kabel nach Anspruch 1, das für den Transport von elektrischer Energie auf Mittelspannungsebene ausgelegt ist.

10. Kabel nach Anspruch 1, angeordnet für den Transport von elektrischer Energie mit hoher Spannung.

11. Verfahren zur Herstellung eines Kabels nach einem der vorhergehenden Ansprüche, das einen Schritt der Extrusion eines Materials zur Bildung des Außenmantels umfasst, **dadurch gekennzeichnet, dass** das Material aus einem Masterbatch gebildet wird, das ein Polyethylen und einen mineralischen Füllstoff in Pulverform umfasst, der Calcium enthält.

12. Verfahren nach Anspruch 11, wobei der mineralische Füllstoff ein Calciumcarbonat und vorzugsweise Kreide ist.

13. Verfahren nach Anspruch 12, bei dem das Masterbatch etwa 15 bis 40 % Polyethylen und etwa 85 bis 60 % Kreide in Pulverform enthält.

14. Verfahren nach dem vorhergehenden Anspruch, bei dem die Masterbatch etwa 25 % Polyethylen und etwa 75 % Kreide umfasst.

15. Verfahren nach Anspruch 14, wobei das Material 32 % Masterbatch umfasst und der Rest im Wesentlichen Polyethylen ist.

## Claims

1. Cable for carrying electrical energy, comprising, from the inside to the outside, a central electrical conductor, a first semi-conductor screen, an electrically insulating layer, a second semi-conductor screen, a metal screen and an external sheath of electrically insulating material, **characterised in that** the material of the external sheath comprises a polyethylene, in which a mineral filler in powder form comprising calcium is dispersed.

2. Cable as claimed in claim 1, wherein the metal screen comprises a metal strip which is laminated to the external sheath.

3. Cable as claimed in claim 1, wherein the mineral filler has an average particle size of about 1.5 µm with a maximum of about 5 µm.

4. Cable as claimed in claim 1, wherein the mineral filler is calcium carbonate.

5. Cable as claimed in claim 4, wherein the calcium carbonate is chalk.

6. Cable as claimed in claim 5, wherein the external sheath comprises about 75 wt.% polyethylene and about 25 wt.% chalk.

7. Cable as claimed in claim 1, wherein the external sheath has a thickness of about 2.2 mm.

8. Cable as claimed in claim 1, wherein the screen comprises an aluminium strip which has a thickness of between about 150 and 200 µm and which is laminated under the external sheath.

9. Cable as claimed in claim 1, arranged to carry low-voltage electrical energy.

10. Cable as claimed in claim 1, arranged to carry high-voltage electrical energy.

11. Method of manufacturing a cable as claimed in any one of the preceding claims, comprising a step of extruding a material in order to form the external sheath, **characterised in that** the material is formed from a masterbatch comprising a polyethylene and a mineral filler in powder form comprising calcium.

12. Method as claimed in claim 11, wherein the mineral filler is a calcium carbonate and preferably chalk.

13. Method as claimed in claim 12, wherein the masterbatch comprises between about 15 and 40 wt.% polyethylene and between about 85 and 60 wt.% chalk in powder form.

14. Method as claimed in the preceding claim, wherein the masterbatch comprises about 25% polyethylene and about 75% chalk.

15. Method as claimed in claim 14, wherein the material comprises 32% masterbatch, the remainder being substantially polyethylene.
